# EUROPÄISCHE PATENTANMELDUNG

(11) **EP 3 940 203 A1**
(43) Veröffentlichungstag der Anmeldung: **19.01.2022**
(21) Anmeldenummer: 20186192.9
(22) Anmeldetag: 16.07.2020
(51) Int. Cl.: F01D 11/08

(54) **ABGASTURBINE**

(71) Anmelder: BMTS Technology GmbH & Co. KG, 70376 Stuttgart (DE)
(72) Erfinder: BERTELE, Gregor, 70569 Stuttgart (DE); BLASCHCZOK, Jürgen, 73770 Denkendorf (DE); ERDEL, Florian, 76646 Bruchsal (DE); PHAM, Kinh Toai, 58093 Hagen (DE); RODECK, Niklas, 70378 Stuttgart (DE); TIETSCH, Volker, 71287 Weissach (DE); SCHWÄGER, Rüdiger, 70499 Stuttgart (DE)
(74) Vertreter: BRP Renaud & Partner mbB Rechtsanwälte Patentanwälte Steuerberater

(57) **Zusammenfassung**

Die vorliegende Erfindung betrifft eine Abgasturbine (1) mit einem Turbinenrad (3), welches in einem Gehäuse (13) aufgenommen ist, wobei zwischen einer Außenkontur (17) des Turbinenrads (3) und einer Innenkontur (18) des Gehäuses (13) ein Spalt (19) ausgebildet ist. Eine erhöhte Effizienz und eine vereinfachte Herstellung der Abgasturbine (1) ergeben sich dadurch, dass ein Abstand (24) zwischen der Außenkontur (17) und der Innenkontur (18) in einem zwischen einem Eintritt (20) und einem Austritt (21) angeordneten Erweiterungsabschnitt (23) des Spalts (19) vergrößert ist.

## Beschreibung

Die vorliegende Erfindung betrifft eine Abgasturbine, insbesondere eines Abgasturboladers, welche ein Turbinenrad sowie ein das Turbinenrad umgebendes Gehäuse aufweist.

Eine Abgasturbine ist eine von einem heißen Gas angetriebene Turbine, welche ein vom heißen Gas, insbesondere Abgas, beaufschlagtes und angetriebenes Turbinenrad aufweist, das über eine drehfest mit dem Turbinenrad verbundene Welle den Antrieb auf eine weitere Anwendung, beispielsweise auf einen Verdichter, überträgt. Das Turbinenrad ist üblicherweise in einem Gehäuse der Abgasturbine aufgenommen. Das Gehäuse weist in der Regel einen Zuführkanal zum Zuführen des heißen Gases, welches nachfolgend auch allgemein als Abgas bezeichnet wird, zum Turbinenrad auf, welches das Turbinenrad radial beaufschlagt. Zur Effizienzsteigerung der Abgasturbine ist eine vorgegebene Fluidführung des Abgases von Bedeutung. Zugleich erfordern unterschiedliche thermische Ausdehnungsverhalten des Turbinenrads und des Gehäuses und das Lagerspiel der das Turbinenrad lagernden Radial- und Axiallager das Vorsehen eines Spalts zwischen einer Außenkontur des Turbinenrads und einer Innenkontur des Gehäuses. Der Spalt dient dem Zweck, ein Anstreifen des Turbinenrads am Gehäuse zu verhindern, insbesondere wenn thermische Ausdehnungen aufgrund des heißen Abgases auftreten. Zugleich ermöglicht der Spalt einen Strömungspfad für das Abgas, der zu Reduzierungen der Effizienz der Abgasturbine führt. Um den Spalt möglichst klein und ausreichend groß auszugestalten, sind aus dem Stand der Technik verschiedene Vorschläge bekannt.

Wird die Größe des Spalts erhöht, führt dies zu Reduzierungen der Effizienz.

Die US 5,185,217 A schlägt vor, im Spalt an der Außenkontur eine abtragbare Schicht aufzubringen, die durch Rotationen des Turbinenrads abgetragen wird. Das Aufbringen der Schicht führt zu einer komplexen Herstellung der Abgasturbine mit erhöhten Kosten. Zudem kann das Abtragen der Beschichtung zu einer Beschädigung der Abgasturbine führen.

In der DE 10 2017 205 457 A1 wird für die Dimensionen des Spalts zwischen der Innenkontur des Gehäuses und der Außenkontur des Turbinenrads ein komplexes mathematisches Verhältnis angegeben, das von axialen Längenanteilen von Schaufeln des Turbinenrads, dem radialen Abstand und weiteren geometrischen Gegebenheiten abhängig ist..

In der DE 101 213 90 A1 wird der Einsatz eines Deckrings vorgeschlagen, welcher die Schaufeln des Turbinenrads radial umgreift. Somit werden die Kosten und der Aufwand zur Herstellung der Abgasturbine erhöht. Zudem weist die Abgasturbine ein erhöhtes Gewicht, insbesondere ein erhöhtes Massenträgheitsmoment, auf.

Die DE 10 2014 212 318 A1 verlangt eine relative axiale Verschiebbarkeit des Turbinenrads zum Gehäuse, sodass bei thermischen Ausdehnungen der Abstand zwischen Turbinengehäuse und Turbinenrad geändert werden kann. Die Verstellbarkeit des Turbinenrads relativ zum Gehäuse erfordert eine aufwändige Überwachung der Betriebszustände, insbesondere des gegebenen Abstandes. Zudem ist ein komplexer Aufbau der Abgasturbine notwendig die ferner zu erhöhten Herstellungskosten führt.

Die vorliegende Erfindung beschäftigt sich daher mit der Aufgabe, für eine Abgasturbine der eingangs genannten Art eine verbesserte oder zumindest andere Ausführungsform anzugeben, die sich insbesondere durch eine erhöhte Effizienz bei zugleich einfacher Herstellung der Abgasturbine auszeichnet.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, in einer Abgasturbine einen zwischen einer Außenkontur eines Turbinenrads und einer Innenkontur eines Gehäuses der Abgasturbine ausgebildeten Spalt in einem Abschnitt zwischen einem Eintritt und einem Austritt des Spalts größer auszubilden als am Eintritt und am Austritt. Hierbei wird die Kenntnis genutzt, dass thermische Verformungen im Bereich zwischen dem Eintritt und dem Austritt ausgeprägter sind, sodass durch den in diesem Bereich vergrößerten Spalt ein Anstreifen des Turbinenrads am Gehäuse verhindert ist. Zugleich führt die am Eintritt und Austritt kleinere Ausbildung des Spalts zu einer Begrenzung der durch den Spalt möglichen Strömung bzw. Leckageströmung, sodass Verlustströme reduziert werden und somit der Gesamtwirkungsgrad und folglich die Effizienz der Abgasturbine, insbesondere gegenüber einer Abgasturbine mit über die Länge gleichmäßig großem Spalt, erhöht sind.

Dem Erfindungsgedanken entsprechend weist die Abgasturbine eine Welle auf, die sich in einer Axialrichtung erstreckt und drehfest mit dem Turbinenrad verbunden ist. Das Turbinenrad weist, auf der von der Welle abgewandten Seite, abstehende und in einer Umfangsrichtung verteilt angeordnete Schaufeln auf. Das Gehäuse umgibt das Turbinenrad und weist einen Zuführkanal auf, durch den im Betrieb das das Turbinenrad antreibende heiße Gas, insbesondere Abgas, strömt. Der Zuführkanal weist eine radial offene Auslassseite auf, sodass im Betrieb aus der Auslassseite strömendes Abgas das Turbinenrad beaufschlagt und antreibt. Der Spalt ist zwischen einer dem Gehäuse zugewandten Außenkontur des Turbinenrads und einer dem Turbinenrad zugewandten Innenkontur des Gehäuses gebildet. Der Spalt erstreckt sich hierbei von einem an der Auslassseite angeordneten Eintritt bis zu einem axial zum Eintritt beabstandeten und auf der von der Welle axial abgewandten Seite des Eintrittes angeordneten Auslass. Erfindungsgemäß ist im Spalt ein Abstand zwischen der Außenkontur und der Innenkontur in einem zwischen dem Eintritt und dem Austritt angeordneten Erweiterungsabschnitt größer als der Abstand der Außenkontur zur Innenkontur am Eintritt sowie am Austritt.

Der Eintritt ist zweckmäßig auf der axial von der Welle abgewandten Seite der Auslassseite an der Auslassseite anschließend angeordnet. Das heißt insbesondere, dass der Eintritt durch eine die Auslassseite begrenzende Wand und/oder Kante des Gehäuses definiert ist.

Die vorliegend angegebenen Richtungen beziehen sich jeweils auf die Axialrichtung der Welle, welche der Rotationsachse der Welle und des Turbinenrads entspricht. Dementsprechend bedeuten Radialrichtung bzw. radial quer zur Axialrichtung und in Umfangsrichtung die Axialrichtung umlaufend/umgebend.

Der Abstand im vorliegenden Sinne entspricht jeweils dem Normalabstand, d. h. jeweils dem kürzesten Abstand zwischen der Innenkontur und der Außenkontur. Folglich weist der Abstand zwischen dem Eintritt und dem Austritt und somit entlang einer Längserstreckung des Spalts, der in der Fachsprache auch als Konturspalt bezeichnet wird, eine variierende Größe auf, die insbesondere durch eine Vergrößerung des Spalts im Erweiterungsabschnitt gegeben ist.

Der Erweiterungsabschnitt ist insbesondere derjenige Abschnitt im Spalt, der im Vergleich zum Eintritt und zum Austritt einen größeren Abstand aufweist und somit eine Erweiterung des Spalts darstellt. Zweckmäßig ist der Abstand im gesamten Erweiterungsabschnitt größer als am Eintritt und am Auslass.

Die Außenkontur des Turbinenrads ist, wie angegeben, die der Innenkontur, insbesondere radial, zugewandte Kontur des Turbinenrads. Zweckmäßig wird die Außenkontur durch die Schaufelspitzen des Turbinenrads gebildet und kann auch als imaginäre Mantelfläche um die Schaufelspitzen verstanden werden.

Der Austritt des Spalts befindet sich radial außerhalb der Hinterkante des Turbinenrades, also radial zwischen der Hinterkante und der Innenkontur des Gehäuses.

Der Zuführkanal verläuft zweckmäßig spiralförmig um die Axialrichtung. Die Auslassseite ist bevorzugt durch eine Düse bzw. einen Hals gebildet. Im Betrieb wird das Abgas über den spiralförmigen Zuführkanal zum Turbinenrad geleitet, um das Turbinenrad radial zu beaufschlagen. Der spiralförmige Zuführkanal umgibt das Turbinenrad radial außen, bevorzugt zu 360°. In der Folge ist im Bereich der Düse bzw. des Halses, in welchem Anfang und Ende der Spiralform aufeinander treffen, eine sogenannte Zunge ausgebildet, die als Trennwand in Umfangsrichtung fungiert.

Die Abgasturbine kann in allen Anwendungen zum Einsatz kommen, in denen ein heißes Gas, insbesondere Abgas, durch den Zuführkanal strömt und das Turbinenrad antreibt. Insbesondere kommt die Abgasturbine in einem Abgasturbolader zum Einsatz. In dem Abgasturbolader ist die Welle mit einem Verdichterrad drehfest verbunden oder verbindbar, sodass das vom Abgas angetriebene Turbinenrad das Verdichterrad über die Welle antreibt oder antreiben kann.

Bevorzugt sind Ausführungsformen, bei denen der Abstand des Spalts am Eintritt minimal ist. Das heißt, dass der Spalt am Eintritt einen Minimalwert besitzt. Dies führt insbesondere dazu, dass eine Strömung des Abgases in den Spalt über den Eintritt reduziert wird. Somit werden die Effizienz und der Gesamtwirkungsgrad der Abgasturbine erhöht. Genutzt wird hierbei die Kenntnis, dass thermische Ausdehnungseffekte im Bereich des Eintritts reduziert auftreten, sodass der Spalt am Eintritt kleiner und somit mit einem kleineren Abstand ausgebildet werden kann, ohne dass es zu einem Anstreifen des Turbinenrads am Gehäuse kommt.

Bevorzugt sind Ausführungsformen, bei denen alternativ oder zusätzlich der Abstand am Austritt minimal ist. Insbesondere sind Ausführungsformen vorstellbar, bei denen der Abstand des Spalts am Eintritt und am Austritt jeweils einen Minimalwert aufweist. Der minimale Abstand des Spalts am Austritt reduziert den möglichen Volumenstrom durch den Spalt, reduziert somit die sogenannten Spaltverluste, und führt somit zu einem erhöhten Gesamtwirkungsgrad und folglich Effizienz der Abgasturbine. Auch hier wird die Kenntnis genutzt, dass thermische Ausdehnungseffekte im Bereich des Austritts reduziert auftreten, sodass der Abstand kleiner gewählt werden kann, ohne dass hierdurch im Betrieb ein Anstreifen des Turbinenrads am Gehäuse erfolgt.

Prinzipiell kann der vergrößerte Abstand im Erweiterungsbereich durch eine Anpassung von aus dem Stand der Technik bekannten Turbinenrädern, insbesondere eine Anpassung der Außenkontur, erfolgen.

Bevorzugt erfolgt der vergrößerte Abstand im Erweiterungsbereich durch eine Anpassung der Innenkontur und somit des Gehäuses. Dies hat den Vorteil, dass derartige Anpassungen am Gehäuse vereinfacht umsetzbar sind, insbesondere da die Gehäuseform und damit der thermische Verzug des Gehäuses - im Gegensatz zum Turbinenrad - stark anwendungsabhängig ist. Zudem können auf diese Weise aus dem Stand der Technik bekannte Turbinenräder weiterhin eingesetzt werden.

Als vorteilhaft gelten Ausführungsformen, bei denen die Außenkontur des Turbinenrads - in einer Projektion senkrecht zur axialen Richtung - vom Eintritt bis zu einer Zwischenstelle relativ zur Radialrichtung konkav und von der Zwischenstelle bis zum Austritt ungekrümmt bzw. flach, insbesondere in Axialrichtung, verläuft. Hierbei verläuft ein axialer Innenabschnitt des Spalts vom Eintritt bis zur Zwischenstelle und ein axialer Außenabschnitt des Spalts von der Zwischenstelle bis zum Auslass. Bevorzugt erstreckt sich der Erweiterungsabschnitt sowohl in den Innenabschnitt als auch in den Außenabschnitt. Das heißt, dass der Spalt sowohl im Bereich des konkav als auch im Bereich der ungekrümmt, insbesondere flach, verlaufenden Außenkontur des Turbinenrads vergrößert ausgebildet ist. Da insbesondere der Übergangsbereich zwischen dem konkaven und dem ungekrümmten Verlauf von thermischen Ausdehnungseffekten besonders betroffen ist, wird hiermit das Anstreifen des Turbinenrads am Gehäuse besonders effektiv und einfach verhindert.

Bei vorteilhaften Varianten ist die Innenkontur des Gehäuses im Erweiterungsabschnitt konvex gekrümmt. Besonders bevorzugt ist die Innenkontur entlang des konkaven Verlaufs der Außenkontur konvex gekrümmt. Somit wird eine effektive und einfache Ausbildung des Spalts mit reduzierter Leckageströmung durch den Spalt und folglich eine vereinfachte Herstellung bei zugleich erhöhtem Gesamtwirkungsgrad und folglich Effizienz realisiert.

Als besonders bevorzugt gelten Ausführungsformen, bei denen der Erweiterungsabschnitt und somit der vergrößerte Abstand durch den konvexen Verlauf der Innenkontur und somit einer entsprechenden Veränderung der Innenkontur realisiert ist. Bevorzugt weist die Innenkontur zu diesem Zweck im Erweiterungsabschnitt einen Krümmungsradius auf, der größer ist als der Krümmungsradius der Außenkontur zwischen dem Eintritt und der Zwischenstelle, insbesondere als ein Krümmungsradius der Außenkontur im konkav verlaufenden Abschnitt der Außenkontur. Das heißt, dass der Krümmungsradius der Innenkontur im Vergleich zum Krümmungsradius der Außenkontur derart gewählt ist, dass hierdurch der Erweiterungsabschnitt mit dem größeren Abstand ausgebildet ist. Dies erlaubt insbesondere eine vereinfachte Ausbildung des Erweiterungsabschnitts. Da die gekrümmt verlaufenden Bereiche der Innenkontur und der Außenkontur von thermischen Ausdehnungseffekten verstärkt betroffen sind, wird zugleich das Abstreifen des Turbinenrads am Gehäuse auf diese Weise einfach und effektiv verhindert.

Der Turbinendurchmesser nimmt zweckmäßig hin zu einer von der Welle axial abgewandten Ausströmseite, über der das Abgas aus dem Turbinenrad axial ausströmt, ab.

Als bevorzugt gelten Ausführungsformen, bei denen der Abstand am Eintritt und/oder am Austritt weniger als zweitausendstel des maximalen Turbinenraddurchmessers des Turbinenrads beträgt. Besonders bevorzugt beträgt der Abstand am Eintritt und/oder am Auslass, und somit insbesondere der minimale Abstand, weniger als eintausendstel des maximalen Turbinendurchmessers. Somit wird eine Leckageströmung durch den Spalt besonders effektiv reduziert und zugleich ein Anstreifen des Turbinenrads am Gehäuse besonders effektiv verhindert. Auf diese Weise wird also eine Erhöhung des Gesamtwirkungsgrads und somit der Effizienz bei zugleich verhindertem Anstreifen erreicht.

Als vorteilhaft gelten Ausführungsformen, bei denen ein maximaler Abstand im Spalt, d. h. ein maximaler Abstand im Erweiterungsabschnitt, zwischen dem 1,2-fachen und dem 3-fachen des Abstands am Eintritt und/oder am Austritt, d. h. insbesondere des minimalen Abstands, entspricht. Besonders bevorzugt ist es hierbei, wenn der maximale Abstand im Erweiterungsbereich zwischen dem 1,5-fachen und dem doppelten des Abstands am Eintritt und/oder am Austritt, insbesondere des minimalen Abstands, entspricht. Ein solcher maximaler Abstand verhindert das Anstreifen des Turbinenrads am Gehäuse besonders effektiv und führt zugleich zu einer Begrenzung der durch den Spalt möglichen Strömung und folglich zu einer erhöhten Effizienz.

Als vorteilhaft gelten Ausführungsformen, bei denen der Erweiterungsabschnitt hinsichtlich seiner Erstreckung entlang des Spalts begrenzt ist.

Zu diesem Zweck ist es bevorzugt, wenn der Erweiterungsabschnitt zum Eintritt beabstandet ist. Als vorteilhaft gelten hierbei Ausführungsformen, bei denen eine Distanz des Erweiterungsabschnitts zum Eintritt zwischen 2 % und 8 % der gesamten Längserstreckung des Spalts beträgt, wobei die Längserstreckung diejenige Erstreckung des Spalts entlang der Innenkontur des Gehäuses ist. Besonders bevorzugt beträgt die Distanz des Erweiterungsabschnitts zum Eintritt 5 % der gesamten Längserstreckung des Spalts. Alternativ oder zusätzlich beträgt die Distanz bis zu derjenigen Stelle des Spalts, an welcher der Turbinendurchmesser des Turbinenrads 110% des Turbinendurchmessers an der Ausströmseite entspricht. Das heißt, dass der Erweiterungsabschnitt erst dann beginnt, wenn der hin zur Ausströmseite abnehmende Turbinendurchmesser 110% des Turbinendurchmessers an der Ausströmseite beträgt. Auf diese Weise wird die Strömung von Abgas in den Spalt besonders effektiv reduziert und somit die Effizienz der Abgasturbine effektiv erhöht.

Bevorzugt ist es ferner, wenn der Erweiterungsabschnitt zum Austritt beabstandet ist.

Vorteilhaft ist es dabei, wenn der Abstand im Spalt von einer Übergangsstelle bis zum Austritt konstant ist. Der Spalt weist also einen Flachabschnitt auf, der sich von der Übergangsstelle bis zum Austritt erstreckt, wobei der Abstand im Flachabschnitt konstant ist.

Als vorteilhaft gelten hierbei Ausführungsformen, bei denen der Flachabschnitt bis zu 80%, insbesondere bis zu 60%, beispielsweise bis zu 40% der gesamten Längserstreckung des Spalts, besonders vorteilhaft 60 % der gesamten Längserstreckung des Spalts, beträgt. Der Flachabschnitt beträgt beispielsweise zwischen 40% und 80% der gesamten Längserstreckung des Spalts, besonders vorteilhaft 60 % der gesamten Längserstreckung des Spalts. Dies ermöglicht eine besonders einfache Herstellung der Abgasturbine bei zugleich erhöhter Effizienz und verhindertem Abstreifen.

Prinzipiell kann der Abstand im Erweiterungsabschnitt stufenartig auf den maximalen Abstand ansteigen und anschließend wieder stufenartig reduziert sein. Das heißt insbesondere, dass der Abstand an einem dem Eintritt nahen inneren Ende des Erweiterungsabschnitts stufenartig auf den maximalen Abstand ansteigen und an einem dem Austritt nahen äußeren Ende des Erweiterungsabschnitts stufenartig sinken kann, wobei der Abstand zwischen dem inneren Ende und dem äußeren Ende im Wesentlichen konstant ist und den maximalen Wert aufweist.

Vorstellbar und bevorzugt sind Ausführungsformen, bei denen der Abstand im Erweiterungsabschnitt variabel verläuft. Das heißt, dass der Abstand zwischen dem inneren Ende und dem äußeren Ende des Erweiterungsabschnitts keinen konstanten Wert aufweist. Insbesondere kann der Abstand im Erweiterungsabschnitt einen gekrümmten, insbesondere trigonometrischen, Verlauf aufweisen. Dabei weist der Abstand bevorzugt in einem zwischen dem inneren Ende und dem äußeren Ende angeordneten Bereich den Maximalwert auf. Insbesondere weist der Abstand mittig zwischen dem inneren Ende und dem äußeren Ende den Maximalwert auf.

Der Erweiterungsabschnitt kann sich in prinzipiell in Umfangsrichtung geschlossen erstrecken. Dies erlaubt eine vereinfachte Herstellung der Abgasturbine, insbesondere des Gehäuses.

Vorstellbar ist es auch, den Erweiterungsabschnitt lediglich in Bereichen auszubilden, bei denen sich die thermische Verformung besonders negativ auf den Spalt auswirkt, und damit die Wahrscheinlichkeit für ein Anstreifen des Turbinenrades am Gehäuse besonders hoch ist. Bevorzugt ist es hierbei, wenn sich der Erweiterungsabschnitt in Umfangsrichtung ausschließlich im Bereich der Zunge erstreckt. Das heißt, dass die Innenkontur lediglich in einem Teilabschnitt des Gehäuses, welcher der Zunge in Umfangsrichtung betrachtet am nächsten liegt, einen Erweiterungsabschnitt aufweist. Mit anderen Worten, der Spalt kann in Umfangsrichtung lediglich im Bereich der Zunge einen sich verändernden Abstand aufweisen. Auf diese Weise können unerwünschte Strömungen im Spalt in Umfangsrichtung begrenzt und somit die Effizienz der Abgasturbine verbessert werden.

Die Abgasturbine, insbesondere der Abgasturbolader, kommt in einem Kraftfahrzeug, beispielsweise einem Personenkraftwagen oder einem Nutzfahrzeug, zum Einsatz. Insbesondere kommt die Abgasturbine in einem Brennkraftmaschinensystem mit einer mit Benzin oder Diesel betriebenen Brennkraftmaschine zum Einsatz.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: einen Schnitt durch eine Abgasturbine,
- Fig. 2: eine vergrößerte Ansicht eines Teils aus Figur 1,
- Fig. 3: eine vergrößerte Ansicht eines Teils einer Abgasturbine entsprechend einer weiteren erfindungsgemäßen Ausführungsform,
- Fig. 4: eine isometrische Detailansicht eines Konturbereichs und eines Halses der Abgasturbine aus Figur 1,
- Fig. 5: eine stark vereinfachte, schaltplanartige Darstellung eines Brennkraftmaschinensystems mit der Abgasturbine.

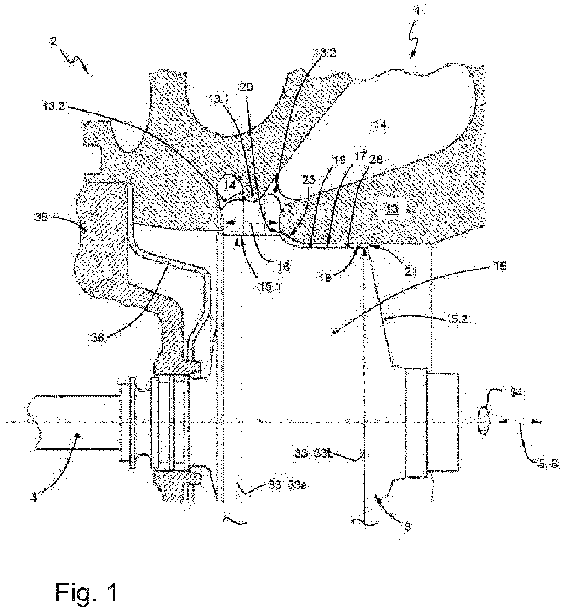

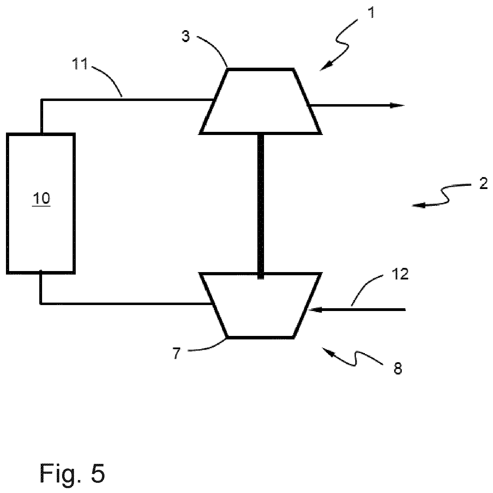

Eine Abgasturbine 1, wie sie in den Figuren 1 bis 5 gezeigt ist, ist beispielsweise Bestandteil eines Abgasturboladers 2, wie dieser beispielhaft in Figur 5 gezeigt ist. Die Abgasturbine 1 weist ein in den Figuren 1 bis 3 sichtbares Turbinenrad 3 auf, welches drehfest mit einer Welle 4 verbunden ist. Die Welle 4 erstreckt sich in einer Axialrichtung 5, die zugleich die Rotationsachse 6 der Welle 4 und des Turbinenrads 3 bildet. Im Betrieb wird das Turbinenrad 3 von einem heißen Gas, im Beispiel des Abgasturboladers 2 von Abgas, beaufschlagt, wobei das heiße Gas, das nachfolgend auch allgemein als Abgas bezeichnet wird, das Turbinenrad 3 antreibt. Das Turbinenrad 3 treibt somit über die Welle 4 eine weitere Anwendung, im Beispiel des Abgasturboladers 2 ein Verdichterrad 7 eines Verdichters 8 des Abgasturboladers 2, an. Der Abgasturbolader 2 ist, wie in Figur 5 gezeigt, üblicherweise Bestandteil eines Brennkraftmaschinensystems 9 mit einer Brennkraftmaschine 10, welches eine Abgasanlage 11 zum Abführen von Abgas von der Brennkraftmaschine 10 und eine Frischluftanlage 12 zum Zuführen von Frischluft zur Brennkraftmaschine 10 aufweist. Hierbei sind das Turbinenrad 3 in der Abgasanlage 11 und das Verdichterrad 7 in der Frischluftanlage 12 eingebunden, sodass das Verdichterrad 7 im Betrieb der Brennkraftmaschine 10 zuzuführende Luft verdichtet.

Die Abgasturbine 1 weist ferner ein Gehäuse 13 auf, welches das Turbinenrad 3 aufnimmt und umgibt. Das Gehäuse 13 weist einen Zuführkanal 14 zum Zuführen des Abgases zum Turbinenrad 3 auf. Das Turbinenrad 3 weist auf seiner von der Welle 4 abgewandten Seite abstehende Schaufeln 15 auf, welche in einer Umfangsrichtung 34 verteilt angeordnet sind. In den Figuren 1 bis 4 sind die Schaufeln 15 nicht dargestellt, so dass das Turbinenrad 3 jeweils nur durch einen einhüllenden Rotationskörper repräsentiert ist, um einen zwischen Schaufelspitzen und Gehäuse 13 vorhandenen Spalt 19 grafisch besser darstellen zu können. Die angegebenen Richtungen beziehen sich jeweils auf die Axialrichtung 5. Somit verläuft die Radialrichtung radial bzw. quer zur Axialrichtung 5 und die Umfangsrichtung 34 die Axialrichtung 5 umlaufend/umgebend.

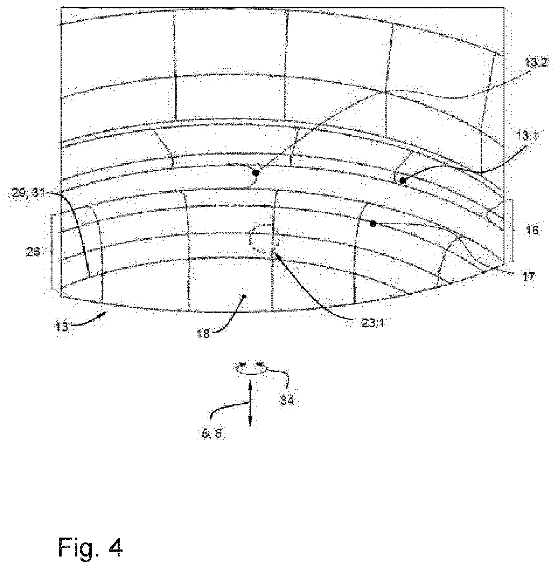

Der Zuführkanal 14 weist eine radial offene Auslassseite 16 auf, aus der im Betrieb Abgas ausströmt und das Turbinenrad 3 beaufschlagt, sodass das Abgas das Turbinenrad 3 antreibt. In den Figuren 1 und 4 ist beispielhaft eine sogenannte Twinflow Turbine dargestellt, bei der das Gehäuse 13 zwei parallel bzw. axial zueinander beabstandete Spiralkanäle aufweist, die durch eine Trennwand 13.1 voneinander getrennt sind und in die den gemeinsamen Halsquerschnitt bildende Auslassseite 16 münden. Ebenfalls zu erkennen sind Zungen 13.2 der Spiralkanäle, die Anfang und Ende eines Spiralkanals voneinander trennen. Durch die Zunge 13.2 kann die Steifigkeit des Gehäuses 13 lokal stark beeinflusst werden, sodass sich das Gehäuse 13 im Bereich der Zunge 13.2 thermisch anders ausdehnt. Dieser Bereich ist in Fig. 4 durch einen gestrichelt dargestellten Kreis im Beriech einer dem Turbinenrad 3 zugewandten Innenkontur 18 des Gehäuses 13 dargestellt. Durch die größere Steifigkeit des Gehäuses 13 in diesem auf einen in Axialrichtung 5 und in Umfangsrichtung 34 begrenzten Bereich der Innenkontur 18 kann der zwischen der Innenkontur 18 und einer Außenkontur 18 des Turbinenrades 3 gebildeter Spalt 19, der sogenannte Konturspalt 19, im Betrieb so stark reduziert werden, dass es zum Anstreifen des Turbinenrades 3 am Gehäuse 13 kommen kann. Die Außenkontur 17 des Turbinenrades 3 wird dabei durch die Schaufelspitzen der Schaufeln 15 gebildet. Zum Ausbilden des Spalts 19 sind die Innenkontur 18 und die Außenkontur 17 zueinander beabstandet. Der Spalt 19 erstreckt sich somit zwischen Turbinenrad 3 und Gehäuse 13, radial außerhalb des Turbinenrades 3 von einer Vorderkante 15.1 bis zu einer Hinterkante 15.2 der Schaufeln 15, wobei die Vorderkante 15.1 durch die Auslassseite 16 von dem Abgas angeströmt wird und das Abgas von der Schaufel 15 umgelenkt und zur Hinterkante 15.2, und damit zum Auslass des Turbinenrades 3 geführt wird. Der Spalt 19 erstreckt sich somit von einem der Vorderkante 15.2 benachbart angeordnetem Eintritt 20 des Spalts 19 bis zu einem der Hinterkante 15.2 benachbart angeordnetem Austritt 21 des Spalts 19, der auf der axial vom Eintritt 20 abgewandten Seite des Spalts 19 zum Eintritt 20 beabstandet ist.

Hierbei weist der Spalt 19 einen Erweiterungsabschnitt 23 auf, in welchem ein Abstand 24 der Innenkontur 18 zur Außenkontur 17 größer ist als der Abstand 24a am Eintritt 20 und als der Abstand 24b am Austritt 20. Das heißt, dass der Spalt 19 entlang seiner sich vom Eintritt 20 bis zum Austritt 21 erstreckenden Längserstreckung eine sich verändernde Größe, insbesondere Höhe, aufweist.

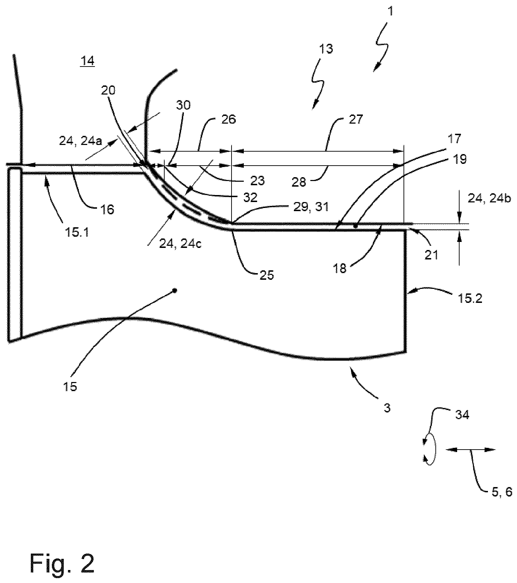

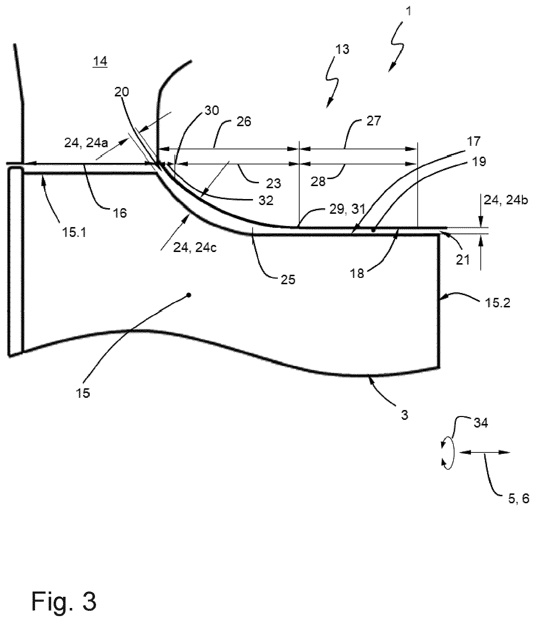

In den in den Figuren 2 und 3 gezeigten Ausführungsbeispielen weist die Außenkontur 17 vom Eintritt 20 bis zu einer Zwischenstelle 25 einen konkav gekrümmten Verlauf auf. Von der Zwischenstelle 25 bis zum Austritt 21 weist die Außenkontur 17 demgegenüber einen ungekrümmten, insbesondere axial verlaufenden, Verlauf auf. Hierbei verläuft ein axialer Innenabschnitt 26 des Spalts 19 vom Eintritt 20 bis zur Zwischenstelle 25 und ein axialer Außenabschnitt 27 des Spalts 19 von der Zwischenstelle 25 bis zum Austritt 21. Wie Figur 3 entnommen werden kann, erstreckt sich der Erweiterungsabschnitt 23 in einer vorteilhaften Weiterbildung sowohl in den Innenabschnitt 26 als auch in den Außenabschnitt 27, wobei der Erweiterungsabschnitt 23 sowohl zum Eintritt 20 als auch zum Austritt 21 beabstandet ist. Die Innenkontur 18 weist im Erweiterungsabschnitt 23 einen konvex gekrümmten Verlauf auf, wobei in den gezeigten Ausführungsbeispielen der konvex gekrümmte Verlauf der Innenkontur 18 den Erweiterungsabschnitt 23 bildet. In Figur 2 ist dabei in gestrichelter Form ein Verlauf der Innenkontur 18 gezeigt, bei dem der Spalt 19 keinen Erweiterungsabschnitt 23 und somit entlang der Längserstreckung einen im Wesentlichen konstanten Abstand 24 hätte, wie er aus dem Stand der Technik bekannt ist. Wie den Figuren 2 und 3 zu entnehmen ist, weist der konvex verlaufende Bereich der Innenkontur 18 einen größeren Krümmungsradius auf als der konkav verlaufende Bereich der Außenkontur 17. Wie den Figuren 2 und 3 ferner entnommen werden kann, ist in den gezeigten Ausführungsbeispielen ein Flachabschnitt 28 des Spalts 19 vorgesehen, in welchem der Abstand 24 im Wesentlichen konstant ist. Der Flachabschnitt 28 erstreckt sich hierbei von einer Übergangsstelle 29 bis zum Austritt 21. Die Erstreckung des Flachabschnitts 28 entspricht hierbei zwischen bis zu 40 % und bis zu 80 %, insbesondere 60 %, der gesamten Längserstreckung des Spalts 19.

Der Erweiterungsabschnitt 23 erstreckt sich von einem axial dem Eintritt 20 nahen inneren Ende 30 des Erweiterungsabschnitts 23 bis zu einem axial dem Austritt 21 nahen äußeren Ende 31. Durch die beabstandete Anordnung des Erweiterungsabschnitts 23 zum Eintritt 20 ist zwischen dem inneren Ende 30 und dem Eintritt 20 ein Abstand 32 vorgesehen, der nachfolgend zur besseren Unterscheidung auch als Distanz 32 bezeichnet wird. Die Distanz 32 beträgt hierbei zwischen 2 % und 8 %, insbesondere 5 %, der gesamten Längserstreckung des Spalts 19 und/oder bis zu derjenigen Stelle des Spalts 19, an welcher der Turbinendurchmesser 33 110% des Turbinendurchmessers 33b an einer Ausströmseite des Turbinenrads 3 entspricht (siehe Figur 1). In den in den Figuren 2 und 3 gezeigten Ausführungsbeispielen schließt der Flachabschnitt 28 an den Erweiterungsabschnitt 23 an. In Figur 2 ist der Erweiterungsabschnitt 23 so gestaltet, dass das äußere Ende 31 der Übergangsstelle 29 und der Zwischenstelle 25 entspricht, so dass sich der Erweiterungsabschnitt 23 ausschließlich im Bereich des Innenabschnitts 26 befindet. In Figur 3 hingegen ist der Erweiterungsabschnitt 23 so gestaltet, dass das äußere Ende 31 der Übergangsstelle 29 axial beabstandet zur Zwischenstelle 25 angeordnet ist, so dass sich der Erweiterungsabschnitt 23 sowohl in den Innenabschnitt 26 als auch in den Außenabschnitt 27 erstreckt.

Der Abstand 24 weist im Erweiterungsabschnitt 23 einen Maximalwert 24c auf. Der maximale Abstand 24c ist also zwischen dem inneren Ende 30 und dem äußeren Ende 31 angeordnet. Hierbei kann der Erweiterungsabschnitt 23 für den Abstand 24 einen gestuften Verlauf aufweisen, bei dem der Abstand 24 am inneren Ende 30 auf den maximalen Abstand 24c ansteigt und bis zum äußeren Ende 31 konstant ist, sodass der Abstand 24 vom inneren Ende 30 bis zum äußeren Ende 31 dem Maximalabstand 24 entspricht. Bevorzugt weist der Abstand 24 im Erweiterungsabschnitt 23 einen gekrümmten, insbesondere trigonometrischen, Verlauf auf. Hierbei ist der maximale Abstand 24c bevorzugt mittig zwischen dem inneren Ende 30 und dem äußeren Ende 31 gegeben.

Ein Turbinendurchmesser 33 des Turbinenrads 3 nimmt, wie Figur 1 entnommen werden kann, von der Welle 4 abgewandt in Axialrichtung 5 ab.

Bevorzugt ist es, wenn der Abstand 24 am Eintritt 20 und am Austritt 21 einen Minimalwert aufweist. Das heißt, dass der Abstand 24a und der Abstand 24b Minimalwerte des Abstands 24 bilden. Bevorzugt ist der Maximalabstand 24c zwischen dem 1,2-fachen und dem dreifachen, insbesondere zwischen dem 1,5-fachen und dem doppelten, des Abstands 24a am Eintritt 19 und/oder des Abstands 24b am Austritt 21. Bevorzugt ist es ferner, wenn der Abstand 24a am Eintritt 20 und/oder der Abstand 24b am Austritt 21 weniger als zweitausendstel, insbesondere weniger als eintausendstel, eines maximalen Turbinenraddurchmessers 33a des Turbinenrads 3 entspricht.

Wie in Figur 4 angedeutet, kann der Spalt 19 prinzipiell lediglich im Bereich der Zunge 13.2 einen Erweiterungsabschnitt 23 aufweisen. Das heißt, dass die Innenkontur 18 eine bezüglich der Zunge 13.2 radial innen gelegene Ausnehmung 23.1 aufweist, die sich in Umfangsrichtung nur über einen begrenzten Bereich erstreckt. Mit anderen Worten, der Erweiterungsabschnitt erstreckt sich in Umfangsrichtung 34 über einen Teilabschnitt des Gehäuses 13. Der für die Ausnehmung 23.1 vorgesehene Bereich ist in Figur 4 durch einen gestrichelt dargestellten Kreis dargestellt. In anderen Worten ist die Innenkontur 18 im Bereich des Erweiterungsabschnitts 23 nicht rotationssymmetrisch gegenüber der Rotationsachse 6 ausgebildet. Vorstellbar ist es auch, dass der Erweiterungsabschnitt 23 rotationssymmetrisch gegenüber der Rotationsachse 6 ausgebildet ist und sich somit über die gesamte Umfangsrichtung 34 erstreckt.

Wie Figur 1 entnommen werden kann, kann die Abgasturbine 1 neben dem Gehäuse 13, d. h. dem Turbinengehäuse 13, ein weiteres Gehäuse 35 aufweisen, in welchem die Welle 4 gelagert ist und das dementsprechend als Lagergehäuse 35 dient. Dabei kann zwischen dem Turbinenrad 3 und dem Lagergehäuse 35 ein Schutzblech 36 angeordnet sein.

Durch das Vorsehen des Erweiterungsabschnitts 23 im Spalt 19 ist es möglich, den Abstand 24a am Eintritt 20 und den Abstand 24b am Austritt 21 kleiner zu halten und zugleich ein durch unterschiedliche thermische Ausdehnungsverhalten bedingtes Anstreifen des Turbinenrads 3 am Gehäuse 13, insbesondere der Außenkontur 17 an der Innenkontur 18, zu vermeiden. Hierbei wird die Kenntnis genutzt, dass die Zunge 13.2 zu einer lokalen Versteifung des Gehäuses 13 führt, die eine entsprechend geringere thermische Ausdehnung des Gehäuses 13, insbesondere der Innenkontur 18 im Bereich der Zunge 13.2, mit sich bringt. Zugleich führen die geringeren Abstände 24a, 24b am Eintritt 20 und Austritt 21 dazu, dass eine Strömung durch den Spalt 19 reduziert ist, sodass der Gesamtwirkungsgrad und somit die Effizienz der Abgasturbine 1 verbessert ist. Das heißt, dass die Abgasturbine 1 bei einfacher Herstellung eine verbesserte Effizienz aufweist.

## Patentansprüche

1. Abgasturbine (1), insbesondere eines Abgasturboladers (2),
- mit einer Welle (4), die sich in einer Axialrichtung (5) erstreckt,
- mit einem Turbinenrad (3), das drehfest mit der Welle (4) verbunden ist und auf der von der Welle (4) abgewandten Seite abstehende und in einer Umfangsrichtung (34) verteilt angeordnete Schaufeln (15) aufweist,
- mit einem das Turbinenrad (3) umgebenden Gehäuse (13),
- wobei das Gehäuse (13) einen Zuführkanal (14) aufweist, durch den im Betrieb Abgas zum Turbinenrad (3) strömt,
- wobei der Zuführkanal (14) eine radial offene Auslassseite (16) aufweist, sodass im Betrieb aus der Auslassseite (16) strömendes Abgas das Turbinenrad (3) beaufschlagt und antreibt,
- wobei eine dem Gehäuse (13) zugewandte Außenkontur (17) des Turbinenrads (3) und eine dem Turbinenrad (3) zugewandte Innenkontur (18) des Gehäuses (13) einen Spalt (19) bilden, der sich von einem an der Auslassseite (16) angeordneten Eintritt (20) bis zu einem axial zum Eintritt (20) beabstandeten und auf der von der Welle (4) axial abgewandten Seite des Eintritts (20) angeordneten Austritt (21) erstreckt,
**dadurch gekennzeichnet,**
**dass** im Spalt (19) ein Abstand (24) zwischen der Außenkontur (17) und der Innenkontur (18) in einem zwischen dem Eintritt (20) und dem Austritt (21) angeordneten Erweiterungsabschnitt (23) größer ist als der Abstand (24a) der Außenkontur (17) zur Innenkontur am Eintritt (20) und als der Abstand (24b) der Außenkontur (17) zur Innenkontur am Austritt (21).

2. Abgasturbine nach Anspruch 1,
**dadurch gekennzeichnet,**
**dass** der Abstand (24a) am Eintritt und/oder der Abstand (24b) am Austritt (21) minimal ist.

3. Abgasturbine nach Anspruch 1 oder 2,
**dadurch gekennzeichnet,**
**dass** der Abstand (24) im Erweiterungsabschnitt durch eine Veränderung der Innenkontur (18) vergrößert ist.

4. Abgasturbine nach einem der Ansprüche 1 bis 3,
**dadurch gekennzeichnet,**
- **dass** die Außenkontur (17) vom Eintritt (20) bis zu einer Zwischenstelle (25) in Axialrichtung (5) konkav gekrümmt verläuft,
- **dass** die Außenkontur (17) von der Zwischenstelle (25) bis zum Austritt (21) in Axialrichtung (5) ungekrümmt verläuft,
- **dass** ein axialer Innenabschnitt (26) des Spalts (19) vom Eintritt (20) bis zur Zwischenstelle (25) und ein axialer Außenabschnitt (27) des Spalts (19) von der Zwischenstelle (25) bis zum Austritt (21) verläuft,
- **dass** der Erweiterungsabschnitt (23) sich in den Innenabschnitt (26) und in den Außenabschnitt (27) hineinstreckt.

5. Abgasturbine nach einem der Ansprüche 1 bis 4,
**dadurch gekennzeichnet,**
**dass** die Innenkontur (18) im Erweiterungsabschnitt (23) in Axialrichtung (5) konvex gekrümmt verläuft.

6. Abgasturbine nach Anspruch 4 und 5,
**dadurch gekennzeichnet,**
**dass** ein Krümmungsradius der Innenkontur (18) im Erweiterungsabschnitt (23) größer ist als ein Krümmungsradius der Außenkontur (17) zwischen dem Eintritt (20) und der Zwischenstelle (25), sodass der Abstand (24) im Erweiterungsabschnitt (23) größer ist als der Abstand (24a) am Eintritt als der Abstand (24b) und am Austritt (21).

7. Abgasturbine nach einem der Ansprüche 1 bis 6,
**dadurch gekennzeichnet,**
**dass** der Abstand (24a) am Eintritt (20) und/oder der Abstand (24b) am Austritt (21) weniger als zweitausendstel, insbesondere weniger als eintausendstel, eines maximalen Turbinenraddurchmessers (33a) des Turbinenrads (3) beträgt.

8. Abgasturbine nach einem der Ansprüche 1 bis 7,
**dadurch gekennzeichnet,**
**dass** ein maximaler Abstand (24c) im Erweiterungsabschnitt (23) zwischen dem 1,2-fachen und dem dreifachen, insbesondere zwischen dem 1,5-fachen und dem doppelten, des Abstands (24a) am Eintritt (20) und/oder des Abstands (24b) am Austritt (21) beträgt.

9. Abgasturbine nach einem der Ansprüche 1 bis 8,
**dadurch gekennzeichnet,**
**dass** der Spalt (19) einen von einer Übergangstelle (29) bis zum Austritt (21) verlaufenden Flachabschnitt (28) aufweist, im welchem der Abstand (24) konstant ist.

10. Abgasturbine nach Anspruch 9
**dadurch gekennzeichnet,**
**dass** der Flachabschnitt (28) zwischen bis zu 40% und bis zu 80% der gesamten Längserstreckung des Spalts (19), insbesondere 60% der gesamten Längserstreckung des Spalts (19), entspricht.

11. Abgasturbine nach einem der Ansprüche 1 bis 10,
**dadurch gekennzeichnet,**
**dass** der Erweiterungsabschnitt (23) zum Eintritt (20) beabstandet ist.

12. Abgasturbine nach Anspruch 11,
**dadurch gekennzeichnet,**
**dass** eine Distanz (32) des Erweiterungsabschnitts (23) zum Eintritt (20):
- zwischen 2% und 8%, insbesondere 5%, der gesamten Längserstreckung des Spalts (19) beträgt, und/oder
- bis zu derjenigen Stelle des Spalts (19) verläuft, an welcher der Turbinendurchmesser des Turbinenrads (3) 110% des Turbinendurchmessers (33b) an einer Ausströmseite des Turbinenrads (3) entspricht.

13. Abgasturbine nach einem der Ansprüche 1 bis 12,
**dadurch gekennzeichnet,**
- **dass** der Abstand (24) im Erweiterungsabschnitt (23) entlang der Längserstreckung des Spalts (21) nicht konstant verläuft, insbesondere einen trigonometrischen Verlauf aufweist,
- **dass** der Abstand (24) zwischen einem dem Eintritt (20) nahen inneren Ende (30) des Erweiterungsabschnitts (23) und einem dem Austritt (21) nahen äußeren Ende (31) des Erweiterungsabschnitts (13) einen Maximalwert aufweist.

14. Abgasturbine nach einem der Ansprüche 1 bis 13,
**dadurch gekennzeichnet,**
**dass** sich der Erweiterungsabschnitt (23) in Umfangsrichtung (34) geschlossen erstreckt.

15. Abgasturbine nach einem der Ansprüche 1 bis 13,
**dadurch gekennzeichnet,**
- **dass** die Innenkontur (18) eine in Umfangsrichtung (34) begrenzte Ausnehmung (23.1) aufweist,
- **dass** der Spalt (19) lediglich im Bereich einer im Zuführkanal (14) ausgebildeten Zunge (13.2) einen Erweiterungsabschnitt (23) aufweist.
